# EUROPEAN PATENT APPLICATION

(11) **EP 3 419 378 A1**
(43) Date of publication of application: **26.12.2018**
(21) Application number: 18178508.0
(22) Date of filing: 19.06.2018
(51) Int. Cl.: H04W 76/27, H04W 8/08

(54) **METHOD OF LOCATION TRACKING AND RELATED APPARATUS USING THE SAME**

(30) Priority: 19.06.2017 US 201762521598 P
(71) Applicant: Industrial Technology Research Institute, 31040 Hsinchu (TW)
(72) Inventor: SINGH, Shubhranshu, 300 Hsinchu City (TW); LAI, Chia-Lin, 701 Tainan City (TW)
(74) Representative: Krauns, Christian

(57) **Abstract**

The method for location tracking used by a base station includes the following steps. Receive LADN information from AMF. Generate a radio access network (RAN) notification area of the base station based on LADN service areas according to the LADN information. Generate a LADN timer according to the LADN information. Assign the LADN timer and the RAN notification area to UE. Send the UE to RRC inactive state. Track location of the UE when the UE is in the RRC inactive state.

## Description

### TECHNICAL FIELD

The disclosure relates in general to 5G network, and more particularly to location tracking and paging task in the 5G network.

### BACKGROUND

The NextGen System (NG System) refers to a Next Generation System such as the next generation (NG) radio access network (RAN), NextGen Core, and etc. The fifth generation (5G) communication network could be such a system. The 5G communication network has been envisioned to support a variety of services and user needs as well as being flexible enough to support future applications. A typical 5G network system includes core network (CN), RAN, and user equipment (UE).

A UE needs to register to 5G core network before it can get any services. This is done as part of UE initial registration to 5G core network. If this UE can be successfully registered to network, it can set up a connection called Connection Management (CM) with a 5G core network function called Access and Mobility Function (AMF). The UE state becomes CM-CONNECTED mode. Whenever a UE is in CM-COONECTED mode, the 5G core network can track the location of the UE and the UE can request Packet Data Unit (PDU) establishment to 5G core network at any time. Meanwhile, AMF will allocate a Registration Area (RA) which consists of a set of Tracking Areas (TA) to the UE. Whenever 5G core network (i.e., AMF) wants to page the UE, it pages the RA which is assigned when UE has successfully registered to the network.

On the other hand, a UE may request to set up a PDU establishment procedure to connect to Local Access Data Network (LADN). LADN is defined in 3GPP TS 23.501. In order to manage UE location, the LADN service area can be also assigned to the UE when UE receives Registration accept message from the 5G core network. LADN service area is composed of a set of TAs and can belong to one or more registration area.

As mentioned above, the 5G core network knows the location of a UE when the UE is in CM-CONNECTED state. UE is ready to receive downlink (DL) data from the 5G network at any time and 5G core network can find the corresponding UE easily as the UE will report its location (e.g., in term of tracking area) to the 5G core network. On the other hand, if the UE is in CM-IDLE state, and when the 5G core network needs to send DL data to the corresponding UE, the 5G core network needs to page the UE before sending the DL data.

Besides the paging by the 5G core network for DL data transmission, a UE can report its location to the 5G core network either through Periodical Registration or Tracking Area Update procedures. In Periodic Registration procedure, the 5G core network will set up a timer for this UE when the UE has been successfully registered to the network. Whether the UE is in CM-CONNECTED or CM-IDLE, when the timer expires, the UE will start the Periodical Registration Procedure to report to the core network its location to get updated parameters, e.g., new tracking areas. The other condition is that a UE in CM-CONNECTED detects it is entering a new tracking area. Therefore, it will automatically report to the core network by triggering a Tracking Area Update (TAU) procedure.

### SUMMARY

The disclosure is directed to method for location tracking used by the base station and the user equipment. The proposed method enables paging solution to UE registered to LADN service area. The solution allows the core network to know whether UE is in LADN service area or not. Using this information, the 5G core network can know which service area it needs to page, the entire Registration Area or LADN service area.

According to one embodiment of the invention, a method for location tracking used by a base station is provided. The method includes the following steps. Receive LADN information from AMF. Generate a radio access network (RAN) notification area of the base station based on LADN service areas according to the LADN information. Generate a LADN timer according to the LADN information. Assign the LADN timer and the RAN notification area to UE. Send the UE to RRC inactive state. Track location of the UE when the UE is in the RRC inactive state.

According to one embodiment of the invention, a method for location tracking used by a user equipment is provided. The method includes the following steps. Receive a RAN notification area from a base station, wherein the RAN notification area is corresponding to LADN service areas in the coverage of the base station. Receive a LADN timer from the base station. Enter a RRC inactive state. Monitor for paging from the base station when the UE is in the RRC inactive state.

According to one embodiment of the invention, a base station is provided. The base station includes a transceiver circuit and a processing circuit coupled to the transceiver circuit. The processing circuit is configured to perform the following operations. Receive, via the transceiver circuit, LADN information from the AMF. Generate a radio access network (RAN) notification area of the base station based on LADN service areas according to the LADN information. Generate a LADN timer according to the LADN information. Assign, via the transceiver circuit, the LADN timer and the RAN notification area to a UE. Send, via the transceiver circuit, the UE to the RRC inactive state. Track location of the UE when the UE is in the RRC inactive state.

According to one embodiment of the invention, a user equipment is provided. The user equipment includes a transceiver circuit and a processing circuit coupled to the transceiver circuit. The processing circuit is configured to perform the following operations. Receive, via the transceiver circuit, a RAN notification area from a base station, wherein the RAN notification area is corresponding to LADN service areas in a coverage of the base station. Receive, via the transceiver circuit, a LADN timer from the base station. Enter the RRC inactive state. Monitor for paging from the base station when the UE is in the RRC inactive state.

The invention will become apparent from the following detailed description of the preferred but non-limiting embodiments. The following description is made with reference to the accompanying drawings.

### BRIEF DESCRIPTION OF THE DRAWINGS

FIG. 1 shows an example 5G network system illustrating a UE moving between different cells according to one embodiment of the invention.
FIG. 2 shows a sequence diagram for the proposed method according to one embodiment of the invention.
FIG. 3 shows a block diagram of a base station according to one embodiment of the invention.
FIG. 4 shows a flowchart of the method of location tracking used by the base station according to one embodiment of the invention.
FIG. 5 shows a block diagram of a user equipment according to one embodiment of the invention.
FIG. 6 shows a flowchart of the method of location tracking used by the user equipment according to one embodiment of the invention.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

With LADN service area, whenever the 5G core network needs to page the UE, if the 5G core network knows the UE right now is inside LADN service area, it can only page the LADN service area rather than the entire RA, which is often much bigger than the LADN service area. In this way, the 5G core network can save lots of resources used in paging the entire RA which is currently assigned to this UE.

Usually a core network pages a UE in the entire RA of the UE. However, it will take radio resource of RANs which involves in those RA of this UE. A UE may possibly access to Local Access Data Network (LADN) and stay nears those LADN areas. If 5G core network can know whether or not a UE is within LADN service areas, it can only page those RANs which are related to LADN service areas. In this manner, it can save time and reduce latency to find a UE and also saves the radio resource of RAN for finding this UE.

However, those situations of successfully paging a UE in LADN service area depend on the information of UE locations. In other words, the 5G core network needs to know the UE is within LADN service area. If a UE is in CM-IDLE, the core network will never know the UE location unless the UE starts a Periodical Registration procedure. Thus, the 5G core network will meet the challenge that a UE in CM-IDLE but DL data is now coming toward this UE. Therefore, this invention proposes a method to make the 5G core network knows whether or not the location of UE is in LADN service area. The 5G network can decide to page to the entire RA or just LADN service area. In this manner, the 5G core network can page a UE in an optimized manner and also save the radio resource of the RANs which relate to those RAs of the UE.

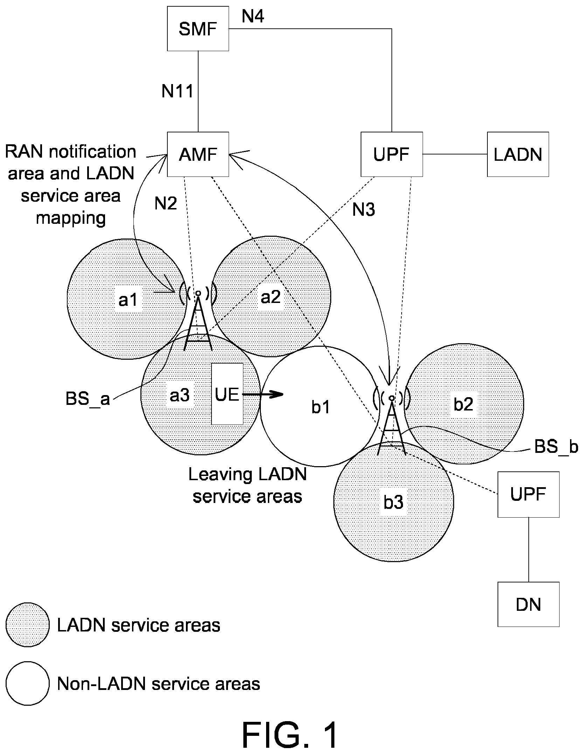

FIG. 1 shows an example 5G network system illustrating a UE moving between different cells according to one embodiment of the invention. The 5G network system shown in FIG. 1 includes session management function (SMF), access and mobility function (AMF), user plane function (UPF), local access data network (LADN), data network (DN), base stations BS_a and BS_b, and user equipment (UE). The terminology base station will also be referred to as RAN node, RAN, or NG-RAN in the following description. N2 is the reference point between the AMF and the RAN, N3 is the reference point between the RAN and the UPF, N4 is the reference point between the SMF and the UPF, N11 is the reference point between the SMF and the AMF. The coverage of the base station BS_a includes cells a1, a2, and a3. The coverage of the base station BS_b includes cells b1, b2, and b3. The shaded circles in FIG. 1 represent LADN service areas, including cells a1, a2, a3, b2, b3. The empty circle in FIG. 1 represents non-LADN service areas, including cell b1.

A radio resource control (RRC) inactive state is introduced in the 5G network system. The RRC inactive mode operation is defined in 3GPP TS 38.300. The AMF, based on network configuration may provide assistance information to the NG-RAN, to assist the NG-RAN's decision whether the UE can be sent to RRC inactive state. In one embodiment, the assistance information mentioned above includes LADN information. For example, the LADN information includes LADN service areas and LADN data network name (DNN). The RRC inactive assistance information may be provided by the AMF during N2 activation with the serving NG-RAN node (i.e. during Registration, Service Request, handover). In addition, the LADN information is provided by the AMF to the UE during a UE registration procedure or a UE configuration update procedure. In other words, each UE may possess specific LADN information different from other UEs.

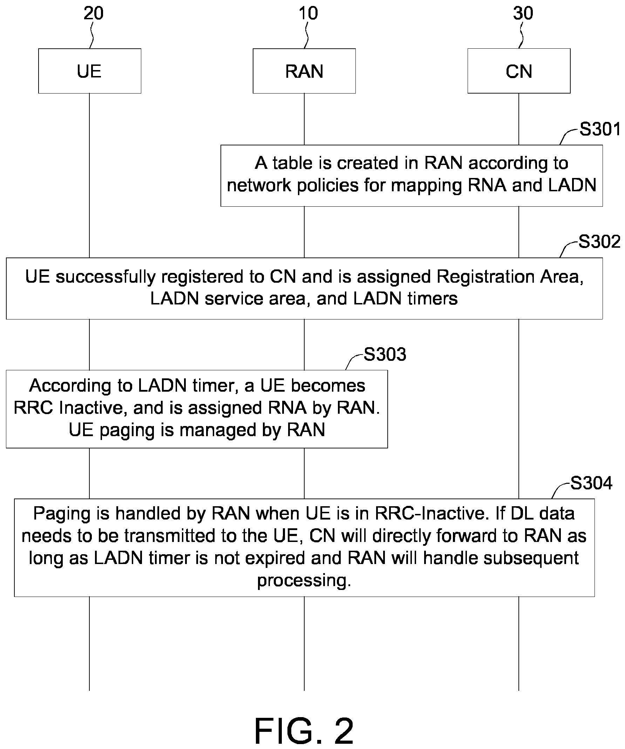

After receiving the assistance information which includes the LADN information, the base station may generate a radio access network (RAN) notification area (also referred to as RNA) of the base station based on LADN service areas according to the LADN information, for example, generate a mapping table between a RAN notification area of the base station and LADN service areas according to the LADN information. Please refer to FIG. 2, which shows a sequence diagram for the proposed method according to one embodiment of the invention. The base station BS_a and BS_b in FIG. 1 may be corresponding to RAN 10 shown in FIG. 2. The AMF and SFM in FIG. 1 may be corresponding to the core network (CN) 30 shown in FIG. 2. The generation of the mapping table as described above may be performed by the RAN 10 in step S301. The RAN 10 creates and maintains the mapping table according to network policies. The mapping table maps LADN service area and RNA and is updated through the N2 interface. For example, the RAN notification area is corresponding to the LADN service areas in the coverage of the base station according to the LADN information. In the example shown in FIG. 1, the RAN notification area of the base station BS_a may include cells a1, a2, and a3, and the RAN notification area of the base station BS_b may include cells b2 and b3.

Next in step S302, during or after UE 20 has successfully registered to CN 30 and is assigned Registration Area, the RAN 10 may generate a LADN timer according to the LADN information and assign the LADN timer and the RAN notification area (which is related to LADN service areas) to UE 20. The LADN timer value may be determined by, for example, based on local policies, subscription information and information provided by UE 20. The LADN timer may be updated whenever the UE 20 communicates with the CN 30.

In step S303, the UE 20 may choose to enter the RRC inactive state upon receiving the LADN timer. To the CN 30, the UE 20 is in CM-CONNCTED mode. In one embodiment, the UE 20 may remain in the RRC inactive state as long as the LADN timer does not expire. That is, the UE 20 does not become CM-IDLE as long as the LADN timer does not expire. The UE 20 also receives the RAN notification area from the RAN 10. In one embodiment, the UE 20 may remain in the RRC inactive state as long as the UE 20 is in the corresponding RAN notification area.

In step S304, the paging of the UE 20 is handled by the RAN 10 when the UE 20 is in the RRC inactive state. That is, when the UE 20 is in the RRC inactive state, the RAN 10 tracks location of the UE 20 and report to the core network 30 using the interface between RAN 10 and CN 30. The UE 20 monitors for paging from the RAN 10 when the UE 20 is in the RRC inactive state. The RAN 10 and CN 30 may keep communication (i.e. N2 communication) for those UEs in the RRC inactive state.

SMF needs know UE location information for handling DL traffic. According to the embodiment given above, with this notification of RAN, the 5G core network can easily know where the UE is. When the 5G core network needs to page the UE, it can easily decide to page the entire Registration Area or LADN service area. For example, if DL data needs to be transmitted from SMF to the UE 20, CN 30 may directly forward the DL data to RAN 10 and RAN 10 will handle subsequent processing. CN 30 will tell RAN 10 which UE in RRC inactive state it needs to page. RAN 10 will take the paging task from the CN 30 and use the mapping table information to find the related UE. The UE, on being paged, may trigger Periodic Registration Area to respond to the CN 30. In other words, the RAN 10 may receive downlink data from SMF, and then transmit the downlink data to the UE in the RAN notification area. This can overcome the challenge mentioned before and solve the pending DL data. A UE in the RRC Inactive state will be managed by RAN and paged by RAN as long as LADN timer does not expire.

In one embodiment, a UE in the RRC inactive state may resume RRC connection due to the following conditions: (1) uplink data pending; (2) uplink signaling procedure (e.g., Periodic Registration); (3) in response to RAN paging; (4) notifying the RAN that it has left the RAN notification area assigned by the RAN.

If UE 20 is leaving out of the assigned RAN notification area (which is related to LADN service area), the UE 20 reports to the currently connected RAN 10. The RAN 10 will update to the mapping table and then report to the CN 30 (e.g., AMF) about the leaving of this UE 20. For example, The RAN 10 (base station) will notify the AMF that the UE 20 leaves the LADN service areas when the UE leaves the RAN notification area. Referring to the example shown in FIG. 1, when the UE moves from cell a3 to cell b1, the UE leaves out the RNA of the base station BS_a. The UE may notify the base station BS_a about its leaving and may also request an update for a new RNA from the base station BS_b. The base station BS_a may notify the AMF that the UE is no longer managed by the base station BS_a but rather by the base station BS_b. Similarly, when the UE moves from cell b3 to cell b1, even though the UE is still in the normal coverage area of the base station BS_b, the UE will notify the base station BS_b about its leaving out of the RNA.

In one embodiment, the base station determines whether the base station continues to manage the UE when the LADN timer expires and the UE is sent to a RRC Connected state. If yes, the base station updates the RNA information according to the LADN information provided from the AMF, assigns another LADN timer and the updated RAN notification area to the UE, and sends the UE to the RRC inactive state. For example, the UE may notify the currently connected base station that the LADN timer expires, then the base station may check whether the UE is still in the RNA of the base station. If the UE remains in the RNA when the LADN timer expires, the base station may decide that the UE remains in the RRC inactive state, and reassigns a LADN timer to the UE. In this situation the paging for UE is still managed by this base station. On the other hand, if the UE is no longer in the RNA of the base station, the base station will not restrict the behavior of the UE. In this situation the behavior of the UE may be controlled by other timers sent from the core network. The UE may also communicate with the base station to determine whether the UE enters RRC connected state or becomes CM-IDLE.

If the UE moves to the RNA of another base station when the LADN timer is expired and the UE is sent to a RRC Connected state, the another base station will determines whether the another base station will manage the UE according to current LADN information from the AMF. If yes, the another base station will generate another RNA information according to the LADN information provided from the AMF. The another base station then assign a LADN timer and RAN notification area to the UE. The another base station then sends the UE to the RRC inactive state and manages the UE.

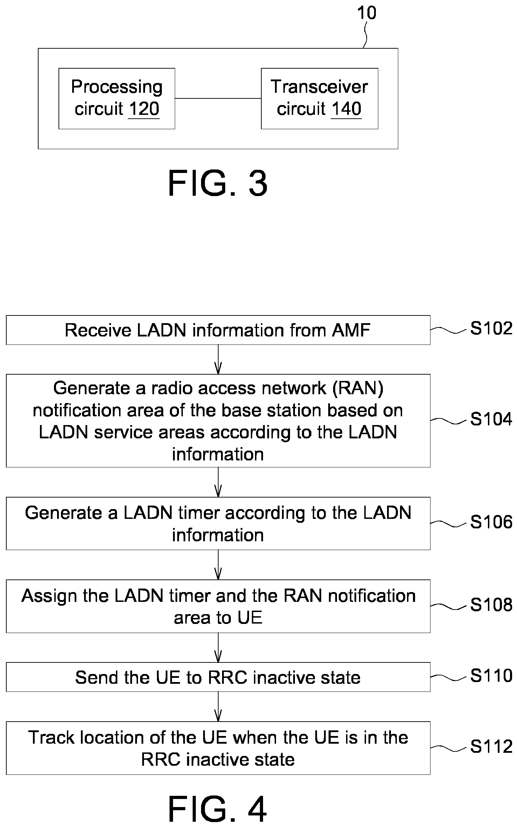

FIG. 3 shows a block diagram of a base station according to one embodiment of the invention. The base station 10 includes a transceiver circuit 140 and a processing circuit 120 coupled to the transceiver circuit 140. The transceiver circuit 140 may include wireless communication interface circuit, such as transmitting and receiving antennas. The processing circuit 120 is for example a microprocessor or a microcontroller. Based on the embodiment shown in FIG. 2, from the perspective of the base station 10, the operation of the base station may be referred to FIG. 4, which shows a flowchart of the method of location tracking used by the base station according to one embodiment of the invention.

The processing circuit 120 shown in FIG. 3 may load a software program or a firmware to execute the method shown in FIG. 4. The method includes the following steps. Step S102: Receive LADN information from AMF. Step S104: Generate a radio access network (RAN) notification area of the base station based on LADN service areas according to the LADN information. Step S106: Generate a LADN timer according to the LADN information. Step S108: Assign the LADN timer and the RAN notification area to UE. Step S110: Send the UE to RRC inactive state. Step S112: Track location of the UE when the UE is in the RRC inactive state. In each step in FIG. 4, incoming message and outgoing message may be received and transmitted wirelessly via the transceiver circuit 140. Detailed operation of each step is not repeated herein.

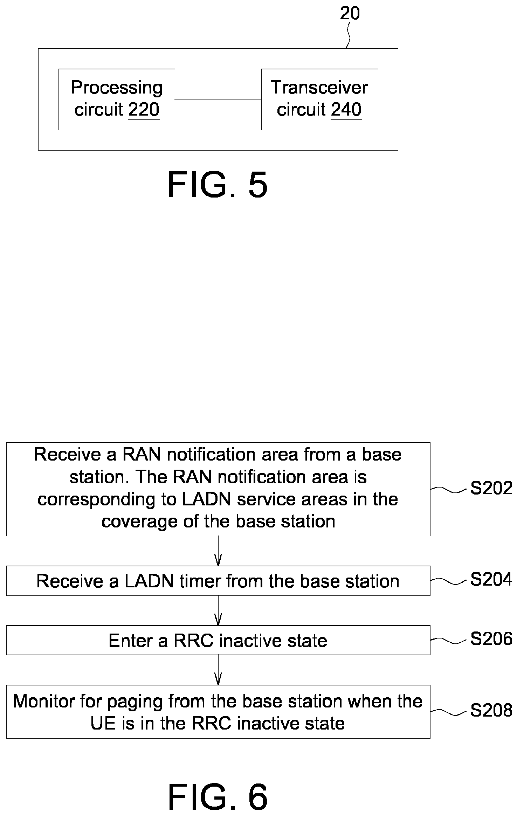

FIG. 5 shows a block diagram of a user equipment according to one embodiment of the invention. The user equipment 20 includes a transceiver circuit 240 and a processing circuit 220 coupled to the transceiver circuit 240. The circuit structure of the user equipment 20 is similar to that of the base station 10 shown in FIG. 3, although the circuit scale in the user equipment 20 is generally smaller than the base station 10. The transceiver circuit 240 may include wireless communication interface circuit, such as transmitting and receiving antennas. The processing circuit 220 is for example a microprocessor or a microcontroller. Based on the embodiment shown in FIG. 2, from the perspective of the user equipment 20, the operation of the user equipment 20 may be referred to FIG. 6, which shows a flowchart of the method of location tracking used by the user equipment according to one embodiment of the invention.

The processing circuit 220 shown in FIG. 5 may load a software program or a firmware to execute the method shown in FIG. 6. The method includes the following steps. Step S202: Receive a RAN notification area from a base station, wherein the RAN notification area is corresponding to LADN service areas in the coverage of the base station. Step S204: Receive a LADN timer from the base station. Step S206: Enter a RRC inactive state. Step S208: monitor for paging from the base station when the UE is in the RRC inactive state. In each step in FIG. 6, incoming message and outgoing message may be received and transmitted wirelessly via the transceiver circuit 240. Detailed operation of each step is not repeated herein.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A method of location tracking used by a base station (10), the method comprising:
receiving local access data network (LADN) information from an access and mobility function (AMF) (30);
generating a radio access network (RAN) notification area of the base station (10) based on LADN service areas according to the LADN information;
generating a LADN timer according to the LADN information;
assigning the LADN timer and the RAN notification area to a user equipment (UE) (20);
sending the UE (20) to a radio resource control (RRC) inactive state; and
tracking location of the UE (20) when the UE (20) is in the RRC inactive state.

2. The method according to claim 1, wherein the RAN notification area is corresponding to the LADN service areas in a coverage of the base station (10) according to the LADN information, and the method further comprises:
notifying the AMF (30) that the UE (20) leaves the LADN service areas when the UE (20) leaves the RAN notification area.

3. The method according to claim 1 or 2, wherein the LADN information is provided by the AMF (30) to the UE (20) during a UE registration procedure or a UE configuration update procedure, and the LADN information comprises the LADN service areas and a LADN data network name.

4. The method according to anyone of the claims 1 to 3, further comprising:
receiving downlink data from a session management function (SMF) (30); and
transmitting the downlink data to the UE (20) in the RAN notification area.

5. The method according to anyone of the claims 1 to 4, further comprising:
determining whether the base station (10) continues to manage the UE (20) when the LADN timer expires and the UE (20) is sent to a RRC Connected state; and
if yes, updating the RNA information according to the LADN information provided from the AMF (30), assigning another LADN timer and the updated RAN notification area to the UE (20), and sending the UE (20) to the RRC inactive state.

6. A method of location tracking used by a user equipment (UE) (20), the method comprising:
receiving a RAN notification area from a base station (10), wherein the RAN notification area is corresponding to LADN service areas in a coverage of the base station (10);
receiving a LADN timer from the base station (10);
entering a RRC inactive state; and
monitoring for paging from the base station (10) when the UE (20) is in the RRC inactive state.

7. The method according to claim 6, further comprising:
notifying the base station (10) when the UE (20) leaves the RAN notification area; and
receiving LADN information from an AMF (30) during a UE registration procedure or a UE configuration update procedure;
wherein the UE (20) remains in the RRC inactive state when the LADN timer does not expire.

8. The method according to claim 6 or 7, further comprising notifying the base station (10) and being sent to a RRC Connected state when the LADN timer expires;
wherein the UE (20) further is assigned another LADN timer and a updated RAN notification area from the base station (10), and the UE (20) is sent to the RRC inactive state by the base station (10).

9. A base station (10), comprising:
a transceiver circuit (140);
a processing circuit (120) coupled to the transceiver circuit (140), configured to:
receive, via the transceiver circuit (140), local access data network (LADN) information from an access and mobility function (AMF) (30);
generate a radio access network (RAN) notification area of the base station (10) based on LADN service areas according to the LADN information;
generate a LADN timer according to the LADN information;
assign, via the transceiver circuit (140), the LADN timer and the RAN notification area to a user equipment (UE) (20);
send, via the transceiver circuit (140), the UE (20) to a radio resource control (RRC) inactive state; and
track location of the UE (20) when the UE (20) is in the RRC inactive state.

10. The base station according to claim 9, wherein the RAN notification area is corresponding to the LADN service areas in a coverage of the base station (10) according to the LADN information;
wherein the LADN information is provided by the AMF (30) to the UE (20) during a UE registration procedure or a UE configuration update procedure;
wherein the LADN information comprises the LADN service areas and a LADN data network name.

11. The base station according to claim 9 or 10, wherein the transceiver circuit (140) is configured to:
receive downlink data from a session management function (SMF) (30); and
transmit the downlink data to the UE (20) in the RAN notification area;
wherein the processing circuit (120) is further configured to:
notify, via the transceiver circuit (140), the AMF (30) that the UE (20) leaves the LADN service areas when the UE (20) leaves the RAN notification area.

12. The base station according to anyone of the claims 9 to 11, wherein the processing circuit (120) is further configured to:
determine whether the base station (10) continues to manage the UE (20) when the LADN timer expires and the UE (20) is sent to a RRC Connected state; and
if yes, update the RNA information according to the LADN information provided from the AMF (30), assign another LADN timer and the updated RAN notification area to the UE (20) via the transceiver circuit (140), and send the UE (20) to the RRC inactive state via the transceiver circuit (140).

13. A user equipment (UE) (20), comprising:
a transceiver circuit (240); and
a processing circuit (220) coupled to the transceiver circuit (240), configured to:
receive, via the transceiver circuit (240), a RAN notification area from a base station (10), wherein the RAN notification area is corresponding to LADN service areas in a coverage of the base station (10);
receive, via the transceiver circuit (240), a LADN timer from the base station (10);
enter a RRC inactive state; and
monitor for paging from the base station (10) when the UE (20) is in the RRC inactive state.

14. The user equipment according to claim 13, wherein the processing circuit (220) is configured to notify, via the transceiver circuit (240), the base station (10) when the UE (20) leaves the RAN notification area;
wherein the processing circuit (220) is configured to receive LADN information from an AMF (30) during a UE registration procedure or a UE configuration update procedure via the transceiver circuit.

15. The user equipment according to claim 13 or 14, wherein the processing circuit (220) is configured to control the UE (20) remains in the RRC inactive state when the LADN timer does not expire;
wherein the processing circuit (220) is configured to notify the base station (10) when and the user equipment (20) is sent to a RRC Connected state under the control of the processing circuit (220) when the LADN timer expires;
wherein the user equipment (20) further is assigned another LADN timer and an updated RAN notification area from the base station (10), and the user equipment (20) is sent to the RRC inactive state by the base station (10) under the control of the processing circuit (220).
